# EUROPÄISCHE PATENTSCHRIFT

(11) **EP 4 022 180 B1**
(45) Veröffentlichungstag und Bekanntmachung des Hinweises auf die Patenterteilung: **11.03.2026**
(21) Anmeldenummer: 20746926.3
(22) Anmeldetag: 23.07.2020
(51) Int. Cl.: F02D 41/14, F02D 41/26, G06F 13/42, F02D 41/28

(54) **VERFAHREN UND RECHENEINRICHTUNG ZUM BETREIBEN EINER STEUEREINHEIT FÜR EINE ABGASSONDE**
METHOD AND COMPUTER DEVICE FOR OPERATING A CONTROL UNIT FOR AN EXHAUST GAS PROBE
PROCÉDÉ ET DISPOSITIF DE CALCUL POUR FAIRE FONCTIONNER UNE UNITÉ DE COMMANDE POUR UNE SONDE DE GAZ D'ÉCHAPPEMENT

(30) Priorität: 30.08.2019 DE 102019213116
(43) Veröffentlichungstag der Anmeldung: 06.07.2022
(73) Patentinhaber: Robert Bosch GmbH, 70442 Stuttgart (DE)
(72) Erfinder: ZOBEL, Tobias-Gerhard, 70469 Stuttgart (DE); BEVOT, Claudius, 70197 Stuttgart (DE); LEDERMANN, Bernhard, 71263 Weil Der Stadt (DE); MEZGER, Florian, 70565 Stuttgart (DE)
(86) Internationale Anmeldenummer: PCT/EP2020/070759
(87) Internationale Veröffentlichungsnummer: WO 2021/037449

(56) Entgegenhaltungen:
- WO-A1-2008/145494
- DE-A1- 102008 001 697
- ANONYMOUS: "L9780 - Wide range air fuel sensor control interface", 1 November 2014 (2014-11-01), XP055738289, Retrieved from the Internet <URL:https://www.st.com/resource/en/datasheet/l9780.pdf> [retrieved on 20201009]
- ANONYMOUS: "Automotive Electronics Product Information Lambda Probe Interface IC - CJ125", BOSCH, 1 April 2006 (2006-04-01), pages 1 - 7, XP055416931
- SEBASTIAN KNÖDLER: "Lambda-Messwandler Version 4.x", 1 December 2015 (2015-12-01), pages 1 - 53, XP055537905, Retrieved from the Internet <URL:http://breitband-lambda.de/files/Doku%20V4.0%20(Stand%2028.12.2015).pdf> [retrieved on 20190102]

## Beschreibung

### Stand der Technik

Die Offenbarung betrifft ein Verfahren zum Betreiben einer Steuereinheit für eine Abgassonde, insbesondere für eine Breitband-Lambdasonde. Relevanter Stand der Technik geht aus dem aus dem Internet stammenden Dokument "L9780 - Wide range air fuel sensor control interface" (URL:https://www.st.com/resource/en/datasheet/I9780.pdf) und der Patentanmeldung DE 10 2008 001697 A1 hervor.

Die Offenbarung betrifft ferner eine Recheneinrichtung zur Ausführung eines derartigen Verfahrens.

### Offenbarung der Erfindung

Bevorzugte Ausführungsformen beziehen sich auf ein Verfahren zum Betreiben einer Steuereinheit für eine Abgassonde gemäß Anspruch 1, Dadurch ist eine gegenüber konventionellen Systemen, die z.B. allein einen ASIC für den Betrieb der Abgassonde bzw. Sensoreinrichtung vorsehen, gesteigerte Flexibilität gegeben, weil die Recheneinrichtung z.B. unterschiedliche Computerprogramme ausführen kann und/oder - im Gegensatz zu dem konventionellen ASIC - effizient (neu) programmiert werden kann, i.d.R. sogar frei programmierbar ist, um den Betrieb der Abgassonde zu ändern. Ferner ist durch das Vorgeben der Messfolge und/oder des Startzeitpunkts ein flexibler Betrieb der Steuereinheit bzw. Sensoreinrichtung ermöglicht.

Das Prinzip gemäß den bevorzugten Ausführungsformen ist nicht auf Abgassonden bzw. Steuereinheiten für Abgassonden begrenzt, sondern kann auch auf Steuereinheiten für andere Sensoreinrichtungen angewandt werden. Die nachfolgende Beschreibung bezieht sich der Übersichtlichkeit halber jedoch beispielhaft auf Abgassonden und Steuereinheiten für Abgassonden. Die genannten bevorzugten Ausführungsformen, Aspekte und Vorteile sind in entsprechender Weise auch auf Steuereinheiten für andere Sensoreinrichtungen und deren Betrieb übertragbar.

Bei weiteren bevorzugten Ausführungsformen ist vorgesehen, dass das Verfahren weiter aufweist: Vorgeben wenigstens eines Übertragungszeitpunkts für eine Datenübertragung von der Steuereinheit zu der Recheneinrichtung. Dadurch kann mittels der - bevorzugt frei programmierbaren Recheneinrichtung - festgelegt werden, wann Datenübertragung(en) von der Steuereinheit zu der Recheneinrichtung erfolgen sollen.

Es ist vorgesehen, dass die Recheneinrichtung Daten mit der Steuereinheit über eine, vorzugsweise bidirektionale, insbesondere serielle, Datenverbindung, insbesondere vom SPI (serial peripheral interface)-Typ, austauscht, wobei die Recheneinrichtung mittels der Datenverbindung ein Synchronisationssignal für die Steuereinheit bereitstellt.

Eine SPI-Schnittstelle weist z.B. vier Datenleitungen und zugehörige Signale auf: 1. SCLK oder SCK, wird z.B. von einem Master zur Synchronisation ausgegeben, 2. MOSI (Master Output, Slave Input), z.B. zur Datenübertragung von Master zu Slave, 3. MISO (Master Input, Slave Output), z.B. zur Datenübertragung von Slave zu Master, 4. Chip Select, CS, z.B. zur Auswahl eines Slaves.

Weiter ist vorgesehen, dass die Recheneinrichtung eine bzw. die Chip Select, CS, Leitung bzw. ein CS Signal der Datenverbindung, insbesondere der SPI-Datenverbindung bzw. SPI-Schnittstelle, verwendet, um das Synchronisationssignal für die Steuereinheit bereitzustellen. Es ist erkannt worden, dass das CS Signal vorteilhaft zur effizienten Synchronisation von einer oder mehreren an die Recheneinrichtung angeschlossenen Steuereinheiten verwendbar ist.

Bei weiteren bevorzugten Ausführungsformen ist vorgesehen, dass die Recheneinrichtung wenigstens eine Recheneinheit zur Ausführung wenigstens eines Computerprogramms aufweist, das dazu ausgebildet ist, zumindest zeitweise einen Betrieb der Steuereinheit und/oder der Abgassonde zu steuern und/oder wenigstens eines der folgenden Elemente auszuführen: a) Vorgeben der Messfolge und/oder des Startzeitpunkts, b) Vorgeben des wenigstens einen Übertragungszeitpunkts, c) Bereitstellen eines bzw. des Synchronisationssignals, z.B. CS-Signals, für die Steuereinheit.

Bei weiteren bevorzugten Ausführungsformen ist vorgesehen, dass die Recheneinrichtung zumindest teilweise eine Ablaufsteuerung für einen Betrieb der Abgassonde und/oder der Steuereinheit realisiert, wobei insbesondere die Ablaufsteuerung zumindest teilweise mittels wenigstens eines Computerprogramms bzw. mittels des wenigstens einen Computerprogramms vorgegeben wird.

Weiter ist vorgesehen, dass die Recheneinrichtung zumindest teilweise eine primäre Ablaufsteuerung für einen Betrieb der Abgassonde realisiert, wobei insbesondere eine sekundäre Ablaufsteuerung der Steuereinheit mittels der primären Ablaufsteuerung gesteuert wird.

Weitere bevorzugte Ausführungsformen beziehen sich auf eine Recheneinrichtung zur Ausführung des Verfahrens gemäß den Ausführungsformen,

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

In der Zeichnung zeigt:
- Fig. 1: schematisch ein vereinfachtes Blockdiagramm einer Brennkraftmaschine, bei der das Verfahren gemäß bevorzugten Ausführungsformen anwendbar ist,
- Fig. 2: schematisch ein vereinfachtes Blockdiagramm einer Recheneinrichtung gemäß weiteren bevorzugten Ausführungsformen,
- Fig. 3A: schematisch ein vereinfachtes Flussdiagramm eines Verfahrens gemäß weiteren bevorzugten Ausführungsformen,
- Fig. 3B: schematisch ein vereinfachtes Flussdiagramm eines Verfahrens gemäß weiteren bevorzugten Ausführungsformen,
- Fig. 3C: schematisch ein vereinfachtes Flussdiagramm eines Verfahrens gemäß weiteren bevorzugten Ausführungsformen, und
- Fig. 4A bis 4E: jeweils schematisch ein vereinfachtes Blockdiagramm gemäß weiteren bevorzugten Ausführungsformen.

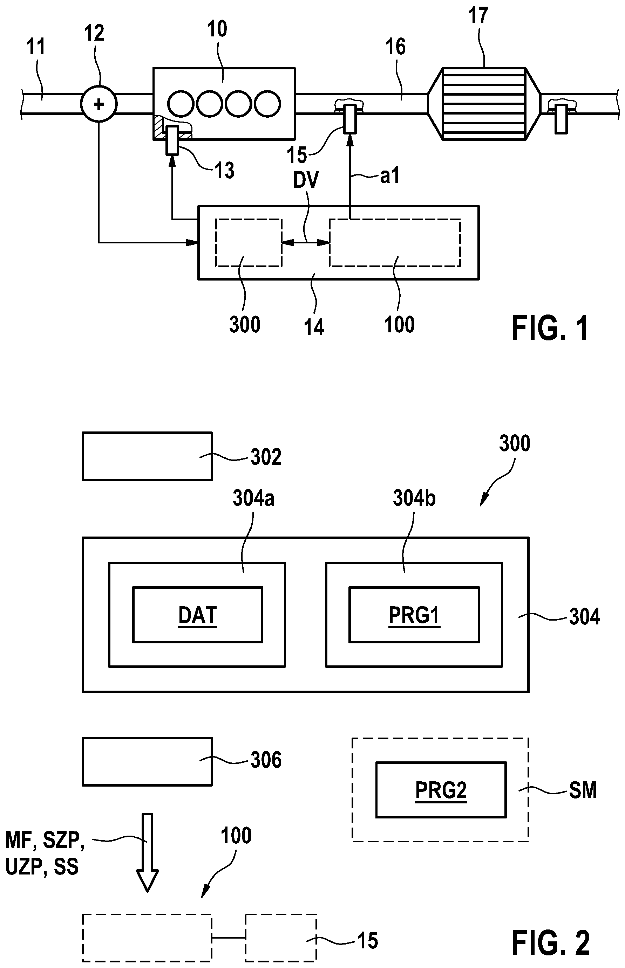

Figur 1 zeigt schematisch an einem Beispiel eines Otto-Motors das technische Umfeld, in dem das Verfahren gemäß bevorzugten Ausführungsformen eingesetzt werden kann. Einer Brennkraftmaschine 10 wird Luft über eine Luftzuführung 11 zugeführt und deren Masse mit einem Luftmassenmesser 12 bestimmt. Der Luftmassenmesser 12 kann als Heißfilm-Luftmassenmesser ausgeführt sein. Das Abgas der Brennkraftmaschine 10 wird über einen Abgaskanal 16 abgeführt, wobei in Strömungsrichtung des Abgases hinter der Brennkraftmaschine 10 eine Abgasreinigungsanlage 17 vorgesehen ist. Zur Steuerung der Brennkraftmaschine 10 ist eine Motorsteuerung 14 vorgesehen, die zum einen die Menge des der Brennkraftmaschine 10 über eine Kraftstoffdosierung 13 zugeführten Kraftstoffs steuert und der zum anderen die Signale des Luftmassenmessers 12 und einer in dem Abgaskanal 16 z.B. vor der Abgasreinigungsanlage 17 angeordneten Abgassonde 15 zugeführt werden. Die Abgassonde 15 bestimmt einen Lambda-Istwert eines der Brennkraftmaschine 10 zugeführten Kraftstoff-Luft- Gemischs und kann z.B. einen Teil eines der Brennkraftmaschine 10 zugeordneten Lambda-Regelkreises bilden. Die Abgassonde 15 kann z.B. als Breitband-Lambdasonde ausgeführt sein.

Für den Betrieb der Abgassonde 15 ist bei bevorzugten Ausführungsformen eine Steuereinheit 100 vorgesehen, die insbesondere zur elektrischen Ansteuerung a1 der Abgassonde 15 bzw. von Komponenten der Abgassonde 15 ausgebildet ist. Beispielsweise kann die Steuereinheit 100 in Form eines ASIC ausgebildet und z.B. in die Motorsteuerung 14 integriert sein.

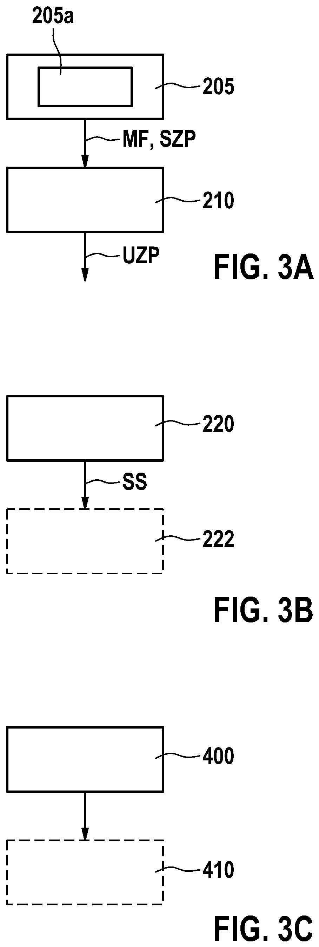

Weitere bevorzugte Ausführungsformen beziehen sich auf ein Verfahren zum Betreiben der Steuereinheit 100 für die Abgassonde 15, wobei das Verfahren, vgl. Fig. 3A, aufweist: Vorgeben 205 einer Messfolge MF und/oder eines Startzeitpunkts SZP, insbesondere für einen Betrieb der Steuereinheit 100 (Fig. 1) und/oder der Abgassonde 15, mittels einer Recheneinrichtung 300 (Fig. 1). Dadurch ist eine gegenüber konventionellen Systemen, die z.B. allein einen ASIC für den Betrieb der Abgassonde 15 vorsehen, gesteigerte Flexibilität gegeben, weil die Recheneinrichtung 300 (Fig. 1) z.B. unterschiedliche Computerprogramme ausführen kann und/oder - im Gegensatz zu dem konventionellen ASIC - effizient (neu) programmiert werden kann, i.d.R. sogar frei programmierbar ist, um den Betrieb der Abgassonde 15 zu ändern.

Das Prinzip gemäß bevorzugten Ausführungsform ist nicht auf Abgassonden 15 bzw. Steuereinheiten 100 für Abgassonden 15 begrenzt, sondern kann auch auf Steuereinheiten für andere Sensoreinrichtungen (nicht gezeigt) angewandt werden. Die nachfolgende Beschreibung bezieht sich der Übersichtlichkeit halber jedoch beispielhaft auf Abgassonden 15 und Steuereinheiten 100 für solche Abgassonden 15.

Bei weiteren bevorzugten Ausführungsformen ist die Recheneinrichtung 300 ebenfalls in die Motorsteuerung 14 integriert.

Bei weiteren bevorzugten Ausführungsformen ist vorgesehen, dass das Verfahren, vgl. Fig. 3A, weiter aufweist: Vorgeben 210 wenigstens eines Übertragungszeitpunkts UZP für eine Datenübertragung von der Steuereinheit 100 zu der Recheneinrichtung 300. Dadurch kann mittels der - bevorzugt frei programmierbaren Recheneinrichtung 300 - festgelegt werden, wann Datenübertragung(en) von der Steuereinheit zu der Recheneinrichtung erfolgen sollen.

Bei weiteren bevorzugten Ausführungsformen kann vorgesehen sein, dass die Elemente MF, SZP z.B. mittels der Recheneinrichtung 300 bzw. eines darauf ablaufenden Computerprogramms erzeugt werden, vgl. Schritt 205a von Fig. 3A.

Bei weiteren bevorzugten Ausführungsformen ist vorgesehen, dass die Recheneinrichtung 300 Daten mit der Steuereinheit 100 über eine, vorzugsweise bidirektionale, insbesondere serielle, Datenverbindung DV (Fig. 1), insbesondere vom SPI (serial peripheral interface)-Typ, austauscht, wobei die Recheneinrichtung 300 mittels der Datenverbindung DV ein Synchronisationssignal für die Steuereinheit 100 bereitstellt. Dadurch kann ein betrieb der Steuereinheit 100 effizient mit dem Betrieb der Recheneinrichtung 300 synchronisiert werden. Figur 3B veranschaulicht dies exemplarisch. In Schritt 220 stellt die Recheneinrichtung 300 das Synchronisationssignal SS für die Steuereinheit 100 bereit, und in dem optionalen Schritt 222 erfolgt ein mit der Recheneinrichtung 300 synchronisierter Betrieb der Steuereinheit 100, der z.B. auch einen Datenaustausch bzw. eine Übertragung von Daten von der Steuereinheit 100 an die Recheneinrichtung 300 umfassen kann.

Bei weiteren bevorzugten Ausführungsformen ist vorgesehen, dass die Recheneinrichtung 300 eine Chip-Select, CS, Leitung bzw. ein CS Signal der Datenverbindung DV (Fig. 1), insbesondere der SPI-Datenverbindung bzw. SPI-Schnittstelle, verwendet, um das Synchronisationssignal SS (Fig. 3B) für die Steuereinheit 100 bereitzustellen.

Bei weiteren bevorzugten Ausführungsformen, vgl. Fig. 2, ist vorgesehen, dass die Recheneinrichtung 300 wenigstens eine Recheneinheit 302 zur Ausführung wenigstens eines Computerprogramms PRG1, PRG2 aufweist, das insbesondere dazu ausgebildet ist, zumindest zeitweise einen Betrieb der Steuereinheit 100 und/oder der Abgassonde 15 zu steuern und/oder wenigstens eines der folgenden Elemente auszuführen: a) Vorgeben 205 (vgl. auch Fig. 3A) der Messfolge MF und/oder des Startzeitpunkts SZP, b) Vorgeben des wenigstens einen Übertragungszeitpunkts UZP, c) Bereitstellen 220 (Fig. 3B) eines bzw. des Synchronisationssignals SS, z.B. CS-Signals, für die Steuereinheit 100.

Bei weiteren bevorzugten Ausführungsformen ist vorgesehen, dass die Recheneinrichtung 300 (Fig. 2) zumindest teilweise eine Ablaufsteuerung für einen Betrieb der Abgassonde 15 und/oder der Steuereinheit 100 realisiert, wobei insbesondere die Ablaufsteuerung zumindest teilweise mittels des wenigstens einen Computerprogramms PRG1, PRG2 vorgegeben wird.

Bei weiteren bevorzugten Ausführungsformen ist vorgesehen, dass die Recheneinrichtung 300 wenigstens eine der Recheneinheit 302 zugeordnete Speichereinheit 304 aufweist zur zumindest zeitweisen Speicherung eines Computerprogramms PRG1 und/oder von Daten DAT (z.B. Daten für die Ablaufsteuerung des Betriebs der Abgassonde 15), wobei das Computerprogramm PRG1 insbesondere zur Ausführung von einem oder mehreren Schritten des Verfahrens gemäß den Ausführungsformen ausgebildet ist.

Bei weiteren bevorzugten Ausführungsformen weist die Recheneinheit 302 wenigstens eines der folgenden Elemente auf: einen Mikroprozessor, einen Mikrocontroller, einen digitalen Signalprozessor (DSP), einen programmierbaren Logikbaustein (z.B. FPGA, field programmable gate array), wenigstens einen Rechenkern. Kombinationen hieraus sind bei weiteren bevorzugten Ausführungsformen auch denkbar.

Bei weiteren bevorzugten Ausführungsformen weist die Speichereinheit 304 wenigstens eines der folgenden Elemente auf: einen flüchtigen Speicher 304a, insbesondere Arbeitsspeicher (RAM), einen nichtflüchtigen Speicher 304b, insbesondere Flash-EEPROM.

Weitere bevorzugte Ausführungsformen beziehen sich auf ein Computerprogramm(produkt) PRG1, PRG2, umfassend Befehle, die bei der Ausführung des Computerprogramms PRG1, PRG2 durch einen Computer, z.B. die vorstehend erwähnte Recheneinheit 302, diesen veranlassen, das Verfahren gemäß den Ausführungsformen auszuführen.

Weitere bevorzugte Ausführungsformen beziehen sich auf ein optionales computerlesbares Speichermedium SM, umfassend Befehle, insbesondere in Form eines Computerprogramms PRG2, die bei der Ausführung durch einen Computer 302 diesen veranlassen, das Verfahren gemäß den Ausführungsformen auszuführen.

Weitere bevorzugte Ausführungsformen beziehen sich auf ein Datenträgersignal, das das Computerprogramm PRG1, PRG2 gemäß den Ausführungsformen charakterisiert und/oder überträgt.

Bei weiteren bevorzugten Ausführungsformen weist die Recheneinrichtung 300 eine SPI-Schnittstelle 306 bzw. einen SPI-Schnittstellenbaustein ("SPI-Modul") zur Realisierung der bidirektionalen Datenverbindung DV (Fig. 1) zu der Steuereinheit 100 auf. Bevorzugt kann ein Chip Select-Signal der SPI-Schnittstelle 306 zur Bereitstellung 220 (Fig. 3B) des Synchronisationssignals SS verwendet werden.

Weitere bevorzugte Ausführungsformen beziehen sich auf eine Steuereinheit 100 (Fig. 1) für eine Abgassonde 15 bzw. generell für eine Sensoreinrichtung, wobei die Steuereinheit 100 zur elektrischen Ansteuerung a1 der Abgassonde 15 ausgebildet ist, wobei die Steuereinheit 100 insbesondere in Form einer anwendungsspeifischen integrierten Schaltung, ASIC, implementiert ist, wobei die Steuereinheit 100 zur Ausführung der folgenden Schritte ausgebildet ist, vgl. Fig. 3C: Empfangen 400 von wenigstens einem der folgenden Elemente von einer Recheneinrichtung 300 (Fig. 1, 2), insbesondere der Recheneinrichtung 300 gemäß den Ausführungsformen: a) Messfolge MF und/oder Startzeitpunkt SZP, insbesondere für einen Betrieb der Steuereinheit 100 und/oder der Abgassonde 15, b) wenigstens ein Übertragungszeitpunkt UZP für eine Datenübertragung von der Steuereinheit 100 zu der Recheneinrichtung 300, c) Synchronisationssignal SS für die Steuereinheit 100.

Bei weiteren bevorzugten Ausführungsformen, vgl. Fig. 3C, ist vorgesehen, dass die Steuereinheit 100 dazu ausgebildet ist, ihren Betrieb in Abhängigkeit der Messfolge MF und/oder des Startzeitpunkts SZP und/oder des Übertragungszeitpunkts UZP und/oder des Synchronisationssignals SS auszuführen bzw. zu ändern, vgl. Schritt 410 aus Fig. 3C, wobei insbesondere die Steuereinheit 100 dazu ausgebildet ist, ihren Betrieb 410 mit dem Synchronisationssignal SS (Fig. 3B) zu synchronisieren.

Bei weiteren bevorzugten Ausführungsformen ist das SPI-Modul 306 zu dem SPI-Standard-kompatibel, kann weiteren bevorzugten Ausführungsformen zufolge aber ggf. in seiner Übertragungslänge und/oder einer Signalpolarität so wie der speziellen Funktion des Chip Select Signals auf die Steuereinheit 100 optimiert sein. Bevorzugt ist mittels der Datenverbindung DV (Fig. 1) eine dedizierte Punkt-zu-Punkt Verbindung zwischen der Recheneinrichtung 300 und der Steuereinheit 100 bereitstellbar. Bei weiteren bevorzugten Ausführungsformen können Bausteine gleicher Funktion, also z.B. mehrere Steuereinheiten 100, in Serie verbunden sein (Daisy Chain) mittels der Datenverbindung DV.

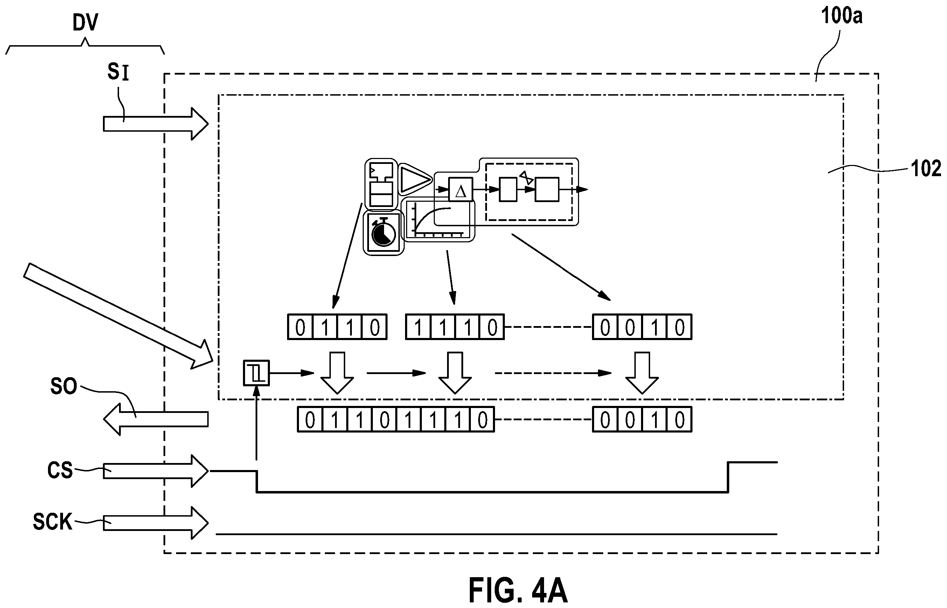

Figur 4A zeigt schematisch ein vereinfachtes Blockdiagramm gemäß weiteren bevorzugten Ausführungsformen. Abgebildet ist eine Steuereinheit 100a mit einer sekundären Ablaufsteuerung 102 (low-level Sequencer), die zumindest zeitweise z.B. durch eine mittels der Recheneinrichtung 300 realisierbare (primäre) Ablaufsteuerung (implementiert z.B. mittels des Computerprogramms PRG1) steuerbar ist. Die Blockpfeile in Fig. 4A links symbolisieren einzelne Leitungen bzw. Anschlüsse bzw. Signale der SPI-Datenverbindung DV, mittels der die Steuereinheit 100a Daten mit der Recheneinrichtung 300 austauschen kann.

Bei weiteren bevorzugten Ausführungsformen ist das SPI-Modul 306 (Fig. 2) der Recheneinrichtung 300 zumindest zeitweise für wenigstens einen der nachfolgend aufgeführten Abläufe nutzbar:
A) Eine Übertragung wird durch die Einnahme eines definierten Signalpegels an der Chip-Select Leitung CS (Fig. 4A) der SPI-Schnittstelle DV gestartet.
B) Darauf folgend wird ein gleichförmiges Taktsignal auf einer Taktleitung SCK ausgegeben.
C) Mit einer definierten Flanke des Taktsignales SCK wird jeweils ein Bit eines zu übertragenden Wertes in geeigneter Reihenfolge von dem SPI-Modul 306 (Fig. 2) auf eine Datenleitung SO (Fig. 4A) (auch "MOSI" genannt) ausgegeben.
D) Mit einer definierten Flanke des Taktsignales SCK wird jeweils ein Bit eines zu lesenden Wertes von dem SPI-Modul 306 (Fig. 2) von einer Datenleitung SI (auch "MISO" genannt) eingelesen.
E) Eine Übertragung wird durch die Einnahme eines definierten Signalpegels an der Chip-Select Leitung CS beendet.

Bei weiteren bevorzugten Ausführungsformen sind über die Datenverbindung DV zu übertragende Daten zum Beispiel: Messwerte von einer vorangegangenen Messung, z.B. ein Messwert eines Analog-Digital-Wandlers (nicht gezeigt) der Steuereinheit 100, Fehlerinformationen von einem vorangegangenen Ereignis z.B. die Änderung des Zustands eines Komparators (nicht gezeigt) der Steuereinheit 100, Statusinformationen von einem vorangegangenen Zustand z.B. ein Signal, das die geordnete Abarbeitung der vorausgegangenen Messung signalisiert.

Gemäß bevorzugten Ausführungsformen ist das CS-Signal der SPI-Datenverbindung DV als Synchronisierungssignal SS für die Steuereinheit 100 bzw. die hierdurch steuerbare Abgassonde 15 verwendbar.

Gemäß bevorzugten Ausführungsformen kann ein, vorzugsweise eindeutig, beschriebenes Takt-, Mess- und/oder Zeitsystem, z.B. des low level Sequencers 102 der Steuereinheit 100a (Fig. 4A) durch eine Signal- bzw. Pegeländerung des CS-Signals getriggert und z.B. exakt synchronisiert werden. Weiter bevorzugt durchläuft die Steuereinheit 100a bzw. ihre sekundäre Ablaufsteuerung 102 dann eine fest definierte Abfolge, z.B. um Einstellungen vornehmen zu können und anschließend eine Messung zu starten, deren Sample-Punkt (Abtastzeitpunkt) sich relativ zur definierten Flanke des CS- Signals befindet. Mit anderen Worten kann durch die Synchronisation auf die Recheneinrichtung 300 mittels des CS-Signals ein genauer Zeitbezug zwischen einer Zeitreferenz der Recheneinrichtung 300 und von mittels der Steuereinheit 100a ermittelten bzw. gemessenen Werten hergestellt werden.

Interne Vorgänge in der Steuereinheit 100, 100a können bevorzugt je nach Definition durch eine fallende oder steigende Flanke des CS-Signals ausgelöst bzw. gestartet werden. Dadurch wird gewährleistet, dass Einstellungen und Messungen in der bzw. durch die Steuereinheit 100, 100a immer einen festen Zeitbezug zu der Recheneinrichtung 300 haben. Somit kann bevorzugt ein (bezogen auf die Recheneinrichtung 300) "externes" Messsystem 100, 100a, 15 durch die geeignete Erzeugung des SPI CS-Signals SS synchronisiert werden.

Bei weiteren bevorzugten Ausführungsformen ist vorgesehen, dass die Steuereinheit 100, 100a, insbesondere durch die exklusive SPI-Anbindung DV, für die Kommunikation mit der Recheneinrichtung 300 nur ein einzelnes n Bit breites Register zum Empfang und/oder Senden von Daten aufweist, darüber hinaus z.B. keinen weiteren (Arbeits-)Speicher benötigt.

Bei weiteren bevorzugten Ausführungsformen können durch die exklusive SPI-Verbindung DV (mit vorzugsweise hoher Geschwindigkeit) folgende Vorteile erzielt werden: a) individuelle Einzelmessungen möglich, b) Kommunikation gleichzeitig, synchron in einer Übertragung, b1) Übertragung von funktionsrelevanten Einstellungen, insbesondere im Beispiel der Steuereinheit für die Abgassonde 15, die individuelle Einstellung der für eine Messung notwendigen Mess- und Stromschalter sowie die Daten für die Stromquellen, b2) Steuerung des Messablaufes, insbesondere im Beispiel Steuereinheit für die Abgassonde 15 das Triggern / Synchronisieren einer Messung, b3) Messwert- und Statusübertragung, insbesondere im Beispiel Steuereinheit für die Abgassonde 15 die Übertragung des Messwertes einer vorausgegangenen Messung zusammen mit Fehler- und Kontrollinformationen, c) deutliche Verringerung des Zeitversatzes zwischen Messwunsch und Messergebnis gegenüber konventionellen ASICs, d) Funktionssystem-verwandte Auswertebausteine (z.B. 2 Steuereinheiten für die Abgassonde 15) können synchron und annährend zeitneutral an den gleichen Hardware Leitungen DV betrieben werden, e) exakte Synchronisierung der Steuereinheit 100 für die Abgassonde 15 auf z.B. den Takt der Recheneinheit 302 (Fig. 2), f) keine extra Hardwareleitung zur Signalisierung des Messendes erforderlich (z.B. kann eine von konventionellen ASICs bekannte IRQ (interrupt request, Unterbrechungsanforderungs-) Leitung entfallen), g) Vermeidung von Frequenzschwebungen, da der Takt bzw. das Synchronisationssignal SS von der Recheneinrichtung 300 kommt, h) Verringerung der integrierten Komplexität der Steuereinheit 100.

Bei weiteren bevorzugten Ausführungsformen sind die zwischen Steuereinheit 100, 100a und Recheneinrichtung zu übertragenden Daten in ihrer Bitposition und dem Inhalt definiert. Bevorzugt ist das SPI-Modul 306 in der Art ausgeführt, dass eine Datenübertragung von der Recheneinrichtung 300 zu der Steuereinheit 100, 100a in kurzer Zeit (z.B. ca. 10µs Übertragungsdauer pro anzusteuernder Steuereinheit 100) möglich ist.

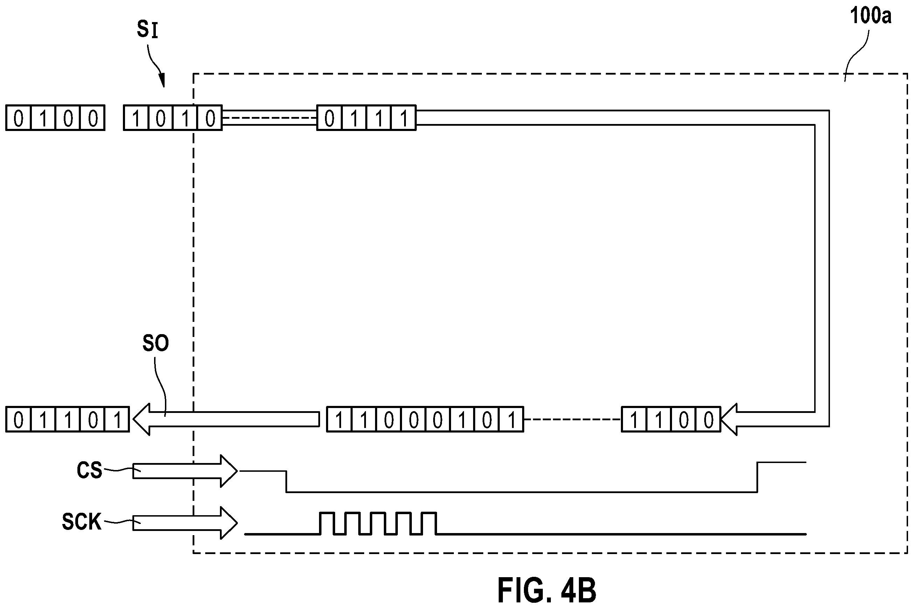

Figur 4B zeigt schematisch ein vereinfachtes Blockdiagramm gemäß weiteren bevorzugten Ausführungsformen. Mit dieser Darstellung soll gezeigt werden, dass zu einem bestimmten Zeitpunkt, nach dem das Chip Select (CS)- Signal einen definierten Zustand eingenommen hat, die Übertragung der Daten erfolgt. Dabei werden in ein SPI-Register der Steuereinheit 100a übertragene Daten mittels des Signals SO ausgegeben und gleichzeitig die Daten, die von der Recheneinrichtung 300 an die Steuereinheit 100a gesendet werden sollen, in Form des Signals SI eingelesen. Das SPI-Register der Steuereinheit 100a kann bevorzugt als Schieberegister ausgebildet sein.

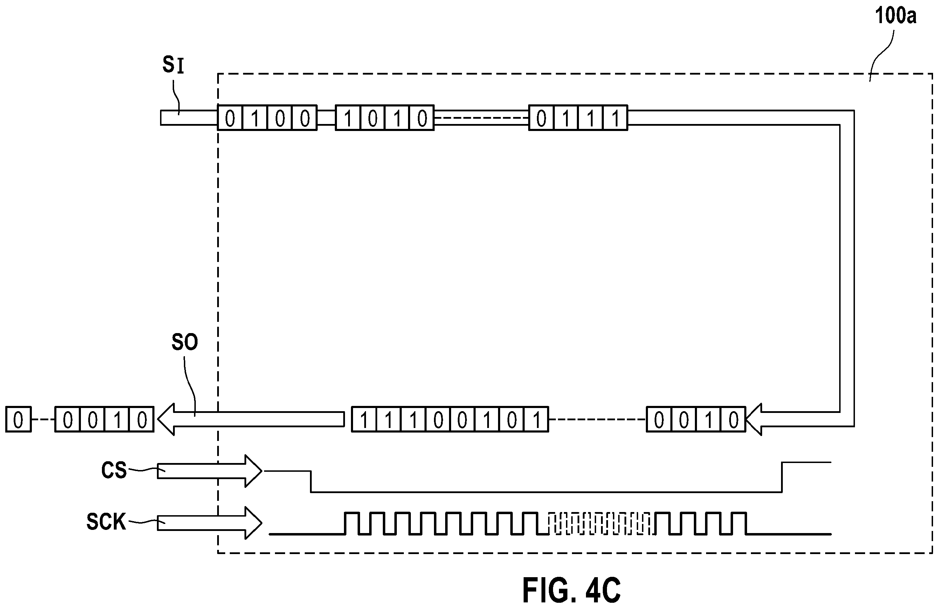

Figur 4C zeigt schematisch ein vereinfachtes Blockdiagramm gemäß weiteren bevorzugten Ausführungsformen. Mit dieser Darstellung soll gezeigt werden, dass bevorzugt die Übertragung mindestens n viele Bit lang ist. Dabei werden die Daten des SPI-Registers der Steuereinheit 100 mittels des Signals SO ausgegeben und gleichzeitig Daten von der Recheneinrichtung 300 in Form des Signals SI eingelesen, bis alle Bits des SPI-Registers behandelt sind.

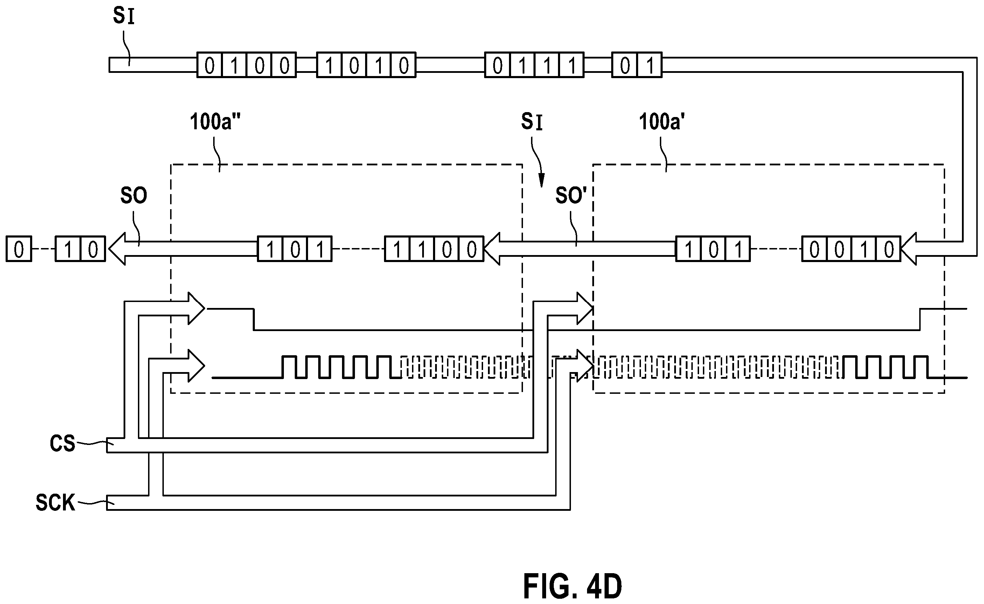

Figur 4D zeigt schematisch ein vereinfachtes Blockdiagramm gemäß weiteren bevorzugten Ausführungsformen. Mit dieser Darstellung soll beispielhaft gezeigt werden, dass die Übertragung vielfache von n Bit lang sein kann. Dabei werden Daten eines SPI-Registers einer Steuereinheit mittels des Signals SO ausgegeben und gleichzeitig die Daten in Form des Signals SI eingelesen bis alle Bits der SPI-Register der Steuereinheit(en) behandelt sind. Wenn dies beispielsweise für die Steuereinheiten 100a', 100a" gemäß Fig. 4D erfolgen soll, kann die Anzahl der Übertragung a', a" 2 x n Bit lang sein. Die Steuereinheiten 100a', 100a" sind dabei miteinander verbunden. Die zu übertragenden Daten der ersten Steuereinheit 100a', vgl. Signal SO', werden dabei durch das SPI-Register der zweiten Steuereinheit 100a" hindurch "geschoben", was auf das Signal SO führt. Bevorzugt ist die Recheneinrichtung 300 dazu ausgebildet, sowohl die empfangenen Daten als auch die zu sendenden Daten aufzubereiten.

Weiter bevorzugt sind die Steuereinheiten 100a', 100a" so verbunden, dass der "Ausgang" SO' der ersten Steuereinheit 100a' mit einem "Eingang" SI der zweiten Steuereinheit 100a" verbunden ist. Die erste Steuereinheit 100a' ist mit ihrem "Eingang" SI mit einem entsprechenden Ausgang "MOSI" (nicht gezeigt) der Recheneinrichtung 300 (Fig. 2) verbunden. Die zweite Steuereinheit 100a" ist mit ihrem "Ausgang" SO mit einem Eingang "MISO" (nicht gezeigt) der Recheneinrichtung 300 verbunden.

Die Signale Chip Select CS und SPI-Takt SCK sind bevorzugt parallel an beiden Steuereinheiten 100a', 100a" vorhanden und mit entsprechenden Pins (Anschlüssen) der Recheneinrichtung 300 (z.B. Anschlüsse CS, SCK der SPI-Schnittstelle 306) verbunden. Das Chip Select Signal CS bleibt bevorzugt während einer gesamten Übertragung auf einem zuvor definierten Pegel. Eine definierte Flanke des Chip Select Signals CS beendet bevorzugt die Übertragung.

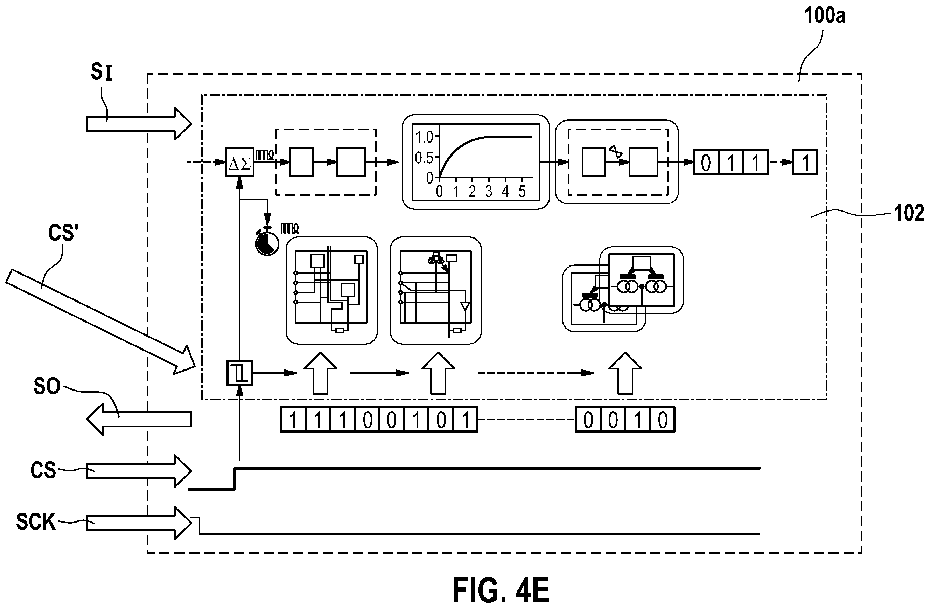

Figur 4E zeigt schematisch ein vereinfachtes Blockdiagramm gemäß weiteren bevorzugten Ausführungsformen. Mit dieser Darstellung soll beispielhaft gezeigt werden, dass mit einer definierten Flanke des Chip Select Signals CS bei der Steuereinheit 100a interne Vorgänge gestartet werden, mithin eine Synchronisation eines Betriebs der Steuereinheit 100a mittels des Chip Select Signals CS möglich ist. Dies ist in Fig. 4E zusätzlich durch den Blockpfeil CS' verdeutlicht. Bei weiteren bevorzugten Ausführungsformen beschreiben die vorstehend genannten internen Vorgänge der Steuereinheit 100a zum Beispiel, dass: a) eine Sequenz von Einstellungen in der Steuereinheit 100a gestartet wird, b) Daten aus dem SPI-Register der Steuereinheit 100a an einzustellende Vorrichtungen in der Steuereinheit 100a übertragen werden, c) Filter (z.B. eines ADC) vorbesetzt werden können, d) das Zeitsystem der Steuereinheit 100a synchronisiert wird, e) eine Messung in der Steuereinheit 100a gestartet werden kann, f) das Ende einer Übertragung gekennzeichnet ist.

Nachstehend sind weitere Vorteile gemäß den bevorzugten Ausführungsformen aufgeführt: A) eine Ablaufsteuerung in der Steuereinheit 100, 100a ist zumindest teilweise, vorzugsweise vollständig, durch eine Ablaufsteuerung mittels der Recheneinrichtung 300 ersetzbar und wird damit frei programmierbar, B) der Zeitpunkt einer Übertragung und die Messung wird durch die Recheneinrichtung 300 bestimmt und somit flexibel einstellbar, C) Einzelne Messwerte werden mit hoher Geschwindigkeit übertragen. Dadurch kann die Zeit zwischen dem Wunsch einer Messung und dem Erhalt der entsprechenden Messdaten auf weniger als 100µs verkürzt werden, D) Es ist kein Rechenwerk in der Steuereinheit 100, 100a notwendig, E) Einzelne Messwerte können direkt nach ihrem Entstehen von der Steuereinheit 100, 100a an die Recheneinrichtung 300 übertragen werden. Damit ist keine Speicherung von Messwerten (und damit kein RAM) in der Steuereinheit 100, 100a erforderlich., F) Komplexe Abläufe können in der Recheneinrichtung 300 abgearbeitet werden, dadurch kann die Steuereinheit 100, 100a einfacher gestaltet werden.

Gemäß weiteren Aspekten kann auch eine Steuereinheit 100 (Fig. 1) mit frei programmierbarer Ablaufsteuerung geschaffen werden. Damit könnte die Flexibilität gegenüber dem Stand der Technik erhöht werden. Auch könnte durch die Gestaltung der Ablaufsteuerung Einfluss auf einen Zeitversatz zwischen Messwunsch und dem Erhalt der Messdaten genommen werden. Der resultierende ASIC 100 kann z.B. bei einem Steuergerätestart der Motorsteuerung 14 (Fig. 1) programmiert werden.

## Patentansprüche

1. Verfahren zum Betreiben einer Steuereinheit (100; 100a) für eine Abgassonde (15), insbesondere für eine Breitband-Lambdasonde (15) für eine Brennkraftmaschine (10) insbesondere eines Kraftfahrzeugs, wobei die Steuereinheit (100; 100a) zur elektrischen Ansteuerung (a1) der Abgassonde (15) ausgebildet ist, wobei die Steuereinheit (100; 100a) insbesondere in Form einer anwendungsspezifischen integrierten Schaltung, ASIC, implementiert ist, wobei das Verfahren aufweist: Vorgeben (205) einer Messfolge (MF) und/oder eines Startzeitpunkts (SZP), insbesondere für einen Betrieb der Steuereinheit (100; 100a) und/oder der Abgassonde (15), mittels einer Recheneinrichtung (300), wobei die Recheneinrichtung (300) Daten mit der Steuereinheit (100; 100a) über eine Datenverbindung (DV) vom SPI-Typ austauscht, wobei die Recheneinrichtung (300) mittels der Datenverbindung (DV) ein Synchronisationssignal (SS) für die Steuereinheit (100; 100a) bereitstellt, wobei die Recheneinrichtung (300) eine Chip-Select, CS, Leitung bzw. ein CS Signal (CS) der Datenverbindung (DV) verwendet, um das Synchronisationssignal (SS) für die Steuereinheit (100; 100a) bereitzustellen, wobei das Verfahren weiter aufweist: zumindest teilweises Realisieren einer primären Ablaufsteuerung für einen Betrieb der Abgassonde (15) mittels der Recheneinrichtung (300), Steuern einer sekundären Ablaufsteuerung (102) der Steuereinheit (100; 100a) mittels der primären Ablaufsteuerung, Synchronisieren der Steuereinheit (100; 100a) mit der Recheneinrichtung (300) mittels des CS Signals.

2. Verfahren nach Anspruch 1, wobei das Verfahren weiter aufweist: Vorgeben (210) wenigstens eines Übertragungszeitpunkts (UZP) für eine Datenübertragung von der Steuereinheit (100; 100a) zu der Recheneinrichtung (300).

3. Verfahren nach wenigstens einem der vorstehenden Ansprüche, wobei die Recheneinrichtung (300) wenigstens eine Recheneinheit (302) zur Ausführung wenigstens eines Computerprogramms (PRG1) aufweist, das dazu ausgebildet ist, zumindest zeitweise einen Betrieb der Steuereinheit (100; 100a) und/oder der Abgassonde (15) zu steuern (205) und/oder wenigstens eines der folgenden Elemente auszuführen: a) Vorgeben (205) der Messfolge (MF) und/oder des Startzeitpunkts (SZP), b) Vorgeben (210) des wenigstens einen Übertragungszeitpunkts (UZP), c) Bereitstellen (220) eines bzw. des Synchronisationssignals (SS) für die Steuereinheit (100; 100a).

4. Verfahren nach wenigstens einem der vorstehenden Ansprüche, wobei die Recheneinrichtung (300) zumindest teilweise eine Ablaufsteuerung für einen Betrieb der Abgassonde (15) und/oder der Steuereinheit (100; 100a) realisiert, wobei insbesondere die Ablaufsteuerung zumindest teilweise mittels wenigstens eines Computerprogramms (PRG1) bzw. mittels des wenigstens einen Computerprogramms (PRG1) vorgegeben wird.

5. Recheneinrichtung (300), die zur Ausführung des Verfahrens nach wenigstens einem der vorstehenden Ansprüche ausgebildet ist.

## Claims

1. Method for operating a control unit (100; 100a) for an exhaust gas probe (15), in particular for a wideband lambda probe (15) for an internal combustion engine (10), in particular of a motor vehicle, wherein the control unit (100; 100a) is designed to electrically actuate (a1) the exhaust gas probe (15), wherein the control unit (100; 100a) is implemented in particular in the form of an application-specific integrated circuit, ASIC, wherein the method includes: specifying (205) a measurement sequence (MF) and/or a starting time (SZP), in particular for an operation of the control unit (100; 100a) and/or of the exhaust gas probe (15), by means of a computing apparatus (300), wherein the computing apparatus (300) exchanges data with the control unit (100; 100a) via a data connection (DV) of the SPI type, wherein the computing apparatus (300) provides a synchronization signal (SS) for the control unit (100; 100a) by means of the data connection (DV), wherein the computing apparatus (300) uses a chip-select, CS, line or a CS signal (CS) of the data connection (DV) in order to provide the synchronization signal (SS) for the control unit (100; 100a), wherein the method furthermore includes: at least partially implementing a primary sequence controller for an operation of the exhaust gas probe (15) by means of the computing apparatus (300), controlling a secondary sequence controller (102) of the control unit (100; 100a) by means of the primary sequence controller, synchronizing the control unit (100; 100a) with the computing apparatus (300) by means of the CS signal.

2. Method according to Claim 1, wherein the method furthermore includes: specifying (210) at least one transmission time (UZP) for a data transmission from the control unit (100; 100a) to the computing apparatus (300).

3. Method according to at least one of the preceding claims, wherein the computing apparatus (300) has at least one computing unit (302) for executing at least one computer program (PRG1), which is designed to at least temporarily control (205) an operation of the control unit (100; 100a) and/or of the exhaust gas probe (15) and/or to carry out at least one of the following elements: a) specifying (205) the measurement sequence (MF) and/or the starting time (SZP), b) specifying (210) the at least one transmission time (UZP), c) providing (220) a or the synchronization signal (SS) for the control unit (100; 100a).

4. Method according to at least one of the preceding claims, wherein the computing apparatus (300) at least partially implements a sequence controller for an operation of the exhaust gas probe (15) and/or of the control unit (100; 100a), wherein the sequence controller is in particular at least partially specified by means of at least one computer program (PRG1) or by means of the at least one computer program (PRG1).

5. Computing apparatus (300) that is designed to carry out the method according to at least one of the preceding claims.

## Revendications

1. Procédé pour faire fonctionner une unité de commande (100 ; 100a) destinée à une sonde de gaz d'échappement (15), en particulier à une sonde lambda à large bande (15) pour un moteur à combustion interne (10), en particulier d'un véhicule à moteur, l'unité de commande (100 ; 100a) étant conçue pour la commande électrique (a1) de la sonde de gaz d'échappement (15), l'unité de commande (100 ; 100a) étant mise en œuvre en particulier sous la forme d'un circuit intégré à application spécifique, ASIC, le procédé comprenant l'étape consistant à : prédéfinir (205) une séquence de mesure (MF) et/ou un point de départ (SZP), en particulier pour un fonctionnement de l'unité de commande (100 ; 100a) et/ou de la sonde de gaz d'échappement (15) au moyen d'un dispositif de calcul (300), le dispositif de calcul (300) échangeant des données avec l'unité de commande (100 ; 100a) par l'intermédiaire d'une liaison de données (DV) de type SPI, le dispositif de calcul (300) fournissant un signal de synchronisation (SS) destiné à l'unité de commande (100 ; 100a) au moyen de la liaison de données (DV), le dispositif de calcul (300) utilisant une ligne de sélection de puce, CS, ou un signal CS (CS) de la liaison de données (DV) pour fournir le signal de synchronisation (SS) destiné à l'unité de commande (100 ; 100a), le procédé comprenant en outre les étapes consistant à : réaliser au moins partiellement une commande séquentielle primaire pour un fonctionnement de la sonde de gaz d'échappement (15) au moyen du dispositif de calcul (300), piloter une commande séquentielle secondaire (102) de l'unité de commande (100 ; 100a) au moyen de la commande séquentielle primaire, et synchroniser l'unité de commande (100 ; 100a) avec le dispositif de calcul (300) au moyen du signal CS.

2. Procédé selon la revendication 1, le procédé comprenant en outre l'étape consistant à : prédéfinir (210) au moins un instant de transmission (UZP) pour un transfert de données de l'unité de commande (100 ; 100a) vers le dispositif de calcul (300).

3. Procédé selon au moins l'une des revendications précédentes, dans lequel le dispositif de calcul (300) comporte au moins une unité de calcul (302) pour exécuter au moins un programme d'ordinateur (PRG1) qui est conçu pour piloter au moins temporairement un fonctionnement de l'unité de commande (100 ; 100a) et/ou de la sonde de gaz d'échappement (15) (205) et/ou pour exécuter au moins l'un des éléments suivants : a) prédéfinir (205) la séquence de mesure (MF) et/ou l'instant de départ (SZP) ; b) prédéfinir (210) ledit au moins un instant de transmission (UZP), c) prédéfinir (220) un signal de synchronisation (SS) destiné à l'unité de commande (100 ; 100a).

4. Procédé selon au moins l'une des revendications précédentes, dans lequel le dispositif de calcul (300) réalise au moins partiellement une commande séquentielle pour un fonctionnement de la sonde de gaz d'échappement (15) et/ou de l'unité de commande (100 ; 100a), en particulier dans lequel la commande séquentielle est prédéfinie au moins partiellement au moyen d'au moins un programme d'ordinateur (PRG1) ou au moyen dudit au moins un programme d'ordinateur (PRG1).

5. Dispositif de calcul (300), conçu pour mettre en œuvre le procédé selon au moins l'une des revendications précédentes.
